# FASCICULE DE BREVET EUROPEEN

(11) **EP 3 695 165 B1**
(45) Date de publication et mention de la délivrance du brevet: **15.12.2021**
(21) Numéro de dépôt: 18811330.2
(22) Date de dépôt: 28.09.2018
(51) Int. Cl.: F21V 23/04, B60Q 3/82

(54) **DISPOSITIF D'ÉCLAIRAGE**
BELEUCHTUNGSVORRICHTUNG
LIGHTING DEVICE

(30) Priorité: 13.10.2017 FR 1759630
(43) Date de publication de la demande: 19.08.2020
(73) Titulaire: PSA Automobiles SA, 78300 Poissy (FR)
(72) Inventeur: NORAIS, Marc, 78500 Sartrouville (FR); SCHNURIGER, Damien, 91300 Massy (FR); ROYER, Guillaume, 91680 Bruyeres Le Chatel (FR)
(86) Numéro de dépôt international: PCT/FR2018/052399
(87) Numéro de publication internationale: WO 2019/073141

(56) Documents cités:
- EP-A1- 2 845 771
- WO-A1-2013/172526
- FR-A1- 3 026 692
- GB-A- 2 425 590
- US-A1- 2007 211 483

## Description

### DOMAINE TECHNIQUE

L'invention se rapporte à un dispositif d'éclairage.

L'invention s'applique notamment au domaine de l'éclairage intérieur d'un espace fermé comme l'habitacle d'un véhicule automobile, et plus particulièrement aux dispositifs d'éclairage d'ambiance, plafonniers et liseuses.

### ÉTAT DE LA TECHNIQUE

Il est connu, notamment du document FR3026692, un dispositif d'éclairage d'un habitacle de véhicule, de type plafonnier ou liseuse, comportant une ou plusieurs sources de lumière, notamment des LEDs supportées par une carte électronique (carte de circuit imprimé ou PCB) ; ces sources étant recouvertes d'un dispositif optique de diffusion de la lumière générée par la ou les sources de lumière.

La commande de l'éclairage se fait par le biais d'une interface tactile comportant une surface de contact ou surface tactile transparente pour laisser passer la lumière générée par les LEDs.

L'interface tactile est de type capacitive ou résistive, qui traduit le toucher de la surface tactile par le doigt de l'utilisateur, en un signal de commande de l'éclairage. Le fonctionnement d'une interface tactile, bien connu de l'homme du métier, ne sera pas décrit en détail dans la présente description.

L'ensemble des éléments est monté dans un boitier dont le couvercle est pourvu d'éléments esthétiques (vitre, masque, etc.). Dans ce dispositif, l'interface tactile est montée sur le boitier par un jeu de glissières et de nervures correspondantes. Ce qui du point de vue de l'opération de montage en elle-même (centrage, blocage en position, ...) et de la réduction des jeux, n'est pas une solution optimale. Le document GB 2425590 A montre un dispositif d'éclairage selon le préambule de la revendication 1.

### EXPOSÉ DE L'INVENTION

L'invention vise à faciliter le montage du dispositif et robustifier sa tenue aux vibrations et par conséquent garantir le contact électrique entre les sources de lumière et l'interface tactile de commande de l'éclairage.

Le dispositif selon l'invention exploite pour cela un assemblage mécanique par clippage qui permet un montage simple et « à l'aveugle ».

Un tel assemblage nécessite habituellement une mise au point sur pièce pour trouver le bon compromis entre la tenue des pièces à l'usage et l'effort de clippage

En effet, malgré tout le soin apporté à ce type d'assemblage, des problèmes de bruits par vibration d'une des pièces et de grincement par mouvement d'une pièce par rapport à l'autre, en roulage par exemple, peuvent apparaitre et nuire à la qualité perçue par l'utilisateur.

Et par effet induit, le contact électrique entre la surface tactile et la carte peut ne plus être garanti.

Les intervalles de tolérance de chaque pièce ne permettent pas d'assurer un assemblage à jeu « zéro ». L'ensemble est donc soit monté en contrainte avec le risque de casser les parties mécaniques conductrices d'électricité ou de les dessouder, soit avec un jeu avec risque de bruit induit par ce jeu.

Pour pallier à ces inconvénients, la présente invention a pour objet un dispositif d'éclairage comportant un boitier logeant au moins une source de lumière, ledit boitier comportant une paroi au moins partiellement transparente supportant une interface tactile pour la commande de la source de lumière et laissant passer la lumière générée par la source de lumière, et un couvercle fermant le boîtier; l'ensemble formé par le boîtier et le couvercle étant assemblé sans jeu par des moyens de clippage, ledit dispositif d'éclairage comportant en outre un moyen de liaison mécanique et électrique souple comprimé entre l'interface tactile et la source de lumière permettant à la fois, de commander la source de lumière et de compenser les contraintes exercées par les moyens de clippage .

Selon l'invention, le boitier à une forme de cuvette dont la paroi de fond supporte l'interface tactile et dont l'ouverture est fermée par une carte de circuit imprimé supportant la source de lumière ; la source de lumière étant orientée vers la paroi de fond (6).

Selon l'invention, l'interface tactile comporte une surface conductrice épousant la paroi de fond, comportant au moins une partie conductrice s'étend à partir de la surface conductrice vers la carte de circuit imprimé ; l'extrémité libre de ladite partie conductrice définissant un contact électrique participant à la transmission d'un signal de commande d'éclairage vers la carte de circuit imprimé pour commander l'éclairage de la source de lumière.

Selon une autre caractéristique, le moyen de liaison mécanique et électrique est disposé entre le contact électrique et la carte de circuit imprimé.

Selon une autre caractéristique, le moyen de liaison mécanique et électrique est un manchon tubulaire creux, en élastomère, chargé de pigments conducteurs dont la densité est déterminée pour assurer une continuité électrique entre le contact électrique et la carte de circuit imprimé.

Selon une autre caractéristique, le couvercle comporte une butée exerçant une force d'appui sur la carte du circuit imprimé ; ladite butée étant centrée sur le manchon tubulaire.

Selon une autre caractéristique, un dispositif optique est disposé entre la paroi de fond et la carte de circuit imprimé en regard de la source de lumière, pour guider la lumière jusqu'à la paroi de fond ; ledit dispositif optique comportant une face d'entrée de lumière en regard de la source de lumière et une face de sortie de lumière en regard de la paroi de fond.

Selon une autre caractéristique, le dispositif optique comporte au moins un pion de centrage coopérant avec la carte de circuit imprimé pour centrer la face d'entrée de lumière du dispositif optique sur la source de lumière.

La présente invention a pour autre objet, un véhicule automobile comportant au moins un dispositif d'éclairage tel que décrit ci-dessus, disposé à l'intérieur de l'habitacle du véhicule automobile.

Selon une caractéristique, le dispositif d'éclairage est une liseuse ou un plafonnier.

### PRÉSENTATION DES FIGURES

D'autres caractéristiques et avantages de la présente invention apparaîtront à la lecture de la description non limitée qui suit, en référence au dessin de la figure unique qui représente une vue en coupe et en perspective d'un exemple de réalisation d'un dispositif d'éclairage selon l'invention.

### DESCRIPTION DÉTAILLÉE

Dans la description qui suit, on qualifiera par « intérieur » ou « interne » tous les éléments ou surfaces se trouvant à l'intérieur du dispositif d'éclairage selon l'invention et, par opposition, on qualifiera par « extérieur » ou « externe » tous les éléments ou surfaces se trouvant à l'extérieur du dispositif d'éclairage selon l'invention.

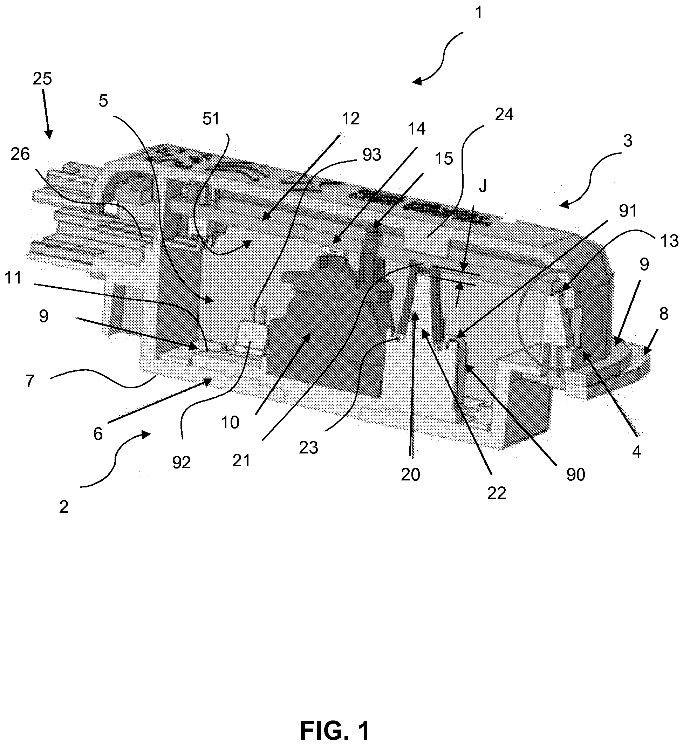

De même, les termes « supérieur » et « inférieur » sont considérés en référence avec l'orientation du dispositif d'éclairage tel qu'illustrée à la figure 1.

Un mode de réalisation d'un dispositif d'éclairage 1 selon l'invention, qui peut être une liseuse ou un plafonnier, est présenté en référence à la figure unique (FIG. 1) suivant une coupe en perspective mettant en évidence les différents éléments du dispositif d'éclairage 1.

Ce dispositif d'éclairage 1 comporte un boitier 2 fermé par un couvercle 3. On note ici que la désignation de boitier et de couvercle est une simple convention et peut être inversée : le boîtier devenant le couvercle et inversement.

L'ensemble formé par le boitier 1 et le couvercle 2 est monté par clippage. Un seul des quatre moyens de clippage 4 est visible dans le mode de réalisation de la figure 1. Les quatre moyens de clippage 4 sont prévus respectivement aux quatre angles du boitier 2 qui présente une forme générale d'un parallélépipède rectangle.

Les moyens de clippage 4 comportent, de manière connue, des pattes élastiquement déformables (ou clips), venues de matière avec le boitier 2 qui se terminent respectivement par des butées présentant des rampes de guidage et qui coopèrent respectivement avec des butées antagonistes définies par les bords d'ouvertures ménagées aux quatre angles du couvercle 3. Le couvercle 3, tout comme le boitier 2, présente une forme générale d'un parallélépipède rectangle.

Avec de tels moyens de clippage, une fois l'assemblage réalisé, il n'y a plus de jeu entre le boitier 2 et le couvercle 3.

Le boitier 2 présente une forme générale de cuvette 5 présentant une ouverture 51 et une paroi de fond 6 qui, dans ce mode de réalisation, est plane, et au moins partiellement transparente pour pouvoir être traversée par la lumière provenant de la source d'éclairage décrite ci-après, tout en masquant l'intérieur du boitier pour un utilisateur présent dans l'habitacle. La paroi de fond 6 définit également une surface tactile 7 d'une interface tactile pour la commande de l'éclairage.

Seule la paroi de fond 6 du boitier 2 est vue et est accessible par les passagers du véhicule pour la commande de l'éclairage, quand il est monté dans l'habitacle.

Le boitier 2 présente également un trottoir périphérique d'appui 8 qui reçoit un trottoir d'appui correspondant 9 du couvercle 3. Les deux trottoirs 8 et 9 sont maintenus plaqués entre eux par les moyens de clippage 4.

Le boitier 2 et son couvercle 3 sont obtenus de manière connue, par injection de matière plastique.

La paroi de fond 6 partiellement transparente est obtenue par injection bi-matière par exemple de PC (Polycarbonate) et ABS (acrylonitrile butadiène styrène).

Les différents éléments contenus dans le boitier 2 (éléments internes) sont maintenant décrits suivant leur ordre de montage dans le boitier 2 en décrivant leur forme, leur fonction et leur interfaçage avec les autres éléments ou avec le boîtier 2 et le couvercle 3.

Le boitier 2 accueille sur la face interne de la paroi de fond 6, une plaque métallique conductrice de l'électricité 9, désignée également par « antenne » et qui participe avec la surface tactile 7 à la définition de l'interface tactile du dispositif d'éclairage 1 et donc à la commande de l'éclairage. Le contour extérieur de la plaque conductrice 9 épouse le contour intérieur de la face interne de la paroi de fond 6. Les contours extérieurs ont la forme générale d'un rectangle.

Ladite antenne 9 comporte quatre languettes 92 s'étendant deux à deux respectivement aux extrémités et à partir des bords latéraux de la plaque. Les languettes 92 sont pliées sensiblement à 85° par rapport au plan principal de la plaque métallique. Une seule languette 92 est représentée sur la figure. Le boitier 2 comporte des nervures 93 en EPDM (éthylène-propylène-diène monomère) sur lesquelles les languettes 92 viennent s'appuyer en contrainte lors de l'assemblage. L'EPDM écarte également tout risque de crissement après montage. Deux nervures 93 parallèles entre elles, sont aménagées dans le boitier 2, en regard de chacune des languettes 92. Elles viennent de matière avec le boitier 2. Seules deux nervures 93 sont représentées sur la figure.

La plaque conductrice 9 est ajourée dans sa partie centrale de manière à laisser passer un dispositif optique 10 qui est accueilli dans la zone centrale de la face interne de la paroi de fond 6 du boitier 2. La face interne comporte un bossage 11 dans cette zone. Le bossage 11 est obtenu par un épaississement local de la paroi de fond 6. Le bossage 11 sert également de butée de centrage pour la plaque conductrice 9. Dans une variante, le bossage 11 est obtenu à partir de l'épaisseur d'une pièce rapportée collée ou soudée dans le fond 6 du boitier 2. Cette pièce rapportée 11, désignée également par « glace », devant être transparente pour laisser passer la lumière tout en masquant l'intérieur du boitier 2 pour un utilisateur présent dans l'habitacle.

Le dispositif optique 10 est conformé pour définir un guide de lumière réalisé, par exemple à partir d'un matériau de type PC cristal, pour la lumière générée par une source d'éclairage 14 du dispositif d'éclairage 1. La face de sortie du guide de lumière 10 est centrée sur la zone centrale de la face interne de la paroi de fond 6. La face d'entrée de lumière du guide de lumière 10 qui est parallèle au plan de l'ouverture 51 du boîtier 2, est conformée pour concentrer le faisceau de lumière généré par la source d'éclairage 14 en limitant les fuites de lumière dans le boitier 2. Le guide de lumière 10, de forme générale elliptique, dirige ensuite le faisceau vers sa face de sortie qui s'évase jusqu'à l'interface avec la zone centrale de la paroi de fond 6 qui est transparente vis-à-vis du faisceau, pour diffuser l'éclairage vers l'extérieur du boitier 2, c'est-à-dire dans l'habitacle quand le boitier 2 est monté dans l'habitacle, par exemple dans la garniture de pavillon, de montant de baie, pilier milieu, ....

Le boitier 2 accueille ensuite une carte de circuit imprimée (PCB) 12 qui repose sur la face supérieure 13 du boitier 2 en fermant l'ouverture 52. Le PCB 12 est centré sur la face supérieure 13 du boitier 2 par quatre pions de centrage disposés respectivement aux quatre angles de la face supérieure 13 du boitier 2. (Les pions de centrage ne sont pas visibles sur la figure).

Le PCB 12 supporte la source d'éclairage 14, typiquement une ou plusieurs LED.

Pour optimiser l'alignement du faisceau de lumière généré par la source d'éclairage 14, par rapport à l'axe optique du guide de lumière 10, et donc par rapport au PCB 12 supportant la source d'éclairage 14, quatre pions de centrage 15 sont aménagés autour de la face d'entrée de lumière du guide de lumière 10. Un seul pion de centrage 15 est visible sur la figure. Ces pions sont venus de matière avec le guide de lumière 10 et coopèrent respectivement, en force, avec des trous traversant aménagés dans l'épaisseur du PCB 12.

La plaque conductrice 9 comporte en outre une partie conductrice définissant une languette 90 métallique conductrice, venue de matière avec la plaque 9, et qui est conformée pour s'étendre en dehors du plan de la plaque 9 selon une direction générale sensiblement perpendiculaire au plan de la plaque 9. L'extrémité de la languette 90 définit un contact électrique 91 d'une liaison électrique entre la plaque conductrice 9 et le PCB 12.

De manière avantageuse, le contact 91 n'est pas directement relié mécaniquement et électriquement (par soudage, collage, ...) au PCB 12, mais la liaison mécanique et électrique est réalisée au moyen d'un manchon 20 souple et conducteur de l'électricité qui est interposé entre le contact 91 et une plage d'accueil 21 conductrice du PCB 12.

Le manchon 20 est réalisé par exemple dans un polymère chargé d'une poudre conductrice ou pigments conducteurs et peut être alternativement en tout type de matériau souple adaptable : un caoutchouc naturel ou synthétique, un élastomère thermoplastique, du silicone, un polymère souple comme une mousse de polyuréthane viscoélastique ou un polymère cellulosique, ou équivalents.

Le manchon 20 est avantageusement porté et centré sur un pion de centrage 22 sur lequel il est enfilé sur quasiment toute sa longueur.

Le pion de centrage 22 est venu de matière avec la paroi de fond 6 ou, dans la variante décrite ci-dessus, avec la pièce rapportée dans la paroi de fond 6. Il s'étend perpendiculairement à la face interne de la paroi de fond 6.

Il a une forme générale cylindrique s'évasant progressivement vers sa base. La base du pion de centrage 22 est élargie pour définir une surface d'accueil 23 plane et horizontale pour le contact électrique 91.

Le manchon 20 présente avantageusement une forme de tube creux de forme générale cylindrique de section circulaire, et qui par déformation élastique autour du pion de centrage 22, quand il est enfilé sur le pion de centrage 22, est maintenu en force autour du pion de centrage 22 et s'appuie par sa base, sur la surface d'accueil 23. La base évasée du manchon 20 est solidarisée mécaniquement au contact électrique 91. La longueur du manchon 20 est choisie pour être supérieure à la longueur (hauteur) du pion de centrage 22 considérée depuis la surface d'accueil 23 du pion de centrage 22 jusqu'à son extrémité libre.

Le couvercle 3 comporte sur sa face interne, une butée 24 venue de matière avec le couvercle 3 et qui applique une pression sur la face opposée du PCB supportant la source d'éclairage 14. La butée 24 est disposée dans l'axe du manchon 20.

Le couvercle 3 est rapporté sur le boitier 2 et assemblé au boitier 2 par encliquetage via les moyens de clippage 4 et les éléments internes sont ainsi pris en sandwich entre le boitier 2 et le couvercle 3.

Dans ce mode de réalisation, tous les éléments internes sont montés à l'intérieur du boitier 2 et c'est le couvercle 3, rapporté sur le boitier 2 qui assure la mise en contrainte des éléments internes du boitier 2.

L'assemblage ainsi réalisé doit pouvoir répondre au compromis entre le maintien des éléments internes sans jeu et l'effort de clippage.

Le manchon souple 20 permet d'assurer par sa compression au moment de l'assemblage du couvercle 3 avec le boitier 2, la contre-réaction de clippage.

C'est la différence de longueur J entre le manchon 20 et le pion de centrage 22 (la longueur du pion 20 est considérée depuis l'interface du contact 91 avec la base du pion 20) qui permet au manchon 20 de se déformer par compression suivant son axe principal de déformation et d'absorber tous les jeux de l'assemblage dus aux intervalles de tolérance des éléments et à leur usure, pour arriver à un assemblage à jeu zéro.

Par ailleurs et de manière avantageuse, le manchon 20 assure une liaison électrique souple entre le contact 91 et la source d'éclairage supporté par le PCB. Une piste conductrice, non représentée, relie la surface d'accueil 21 du PCB à la source d'éclairage soit aux pattes de connexion de la ou des LEDs 14.

De par sa compression suivant son axe principal de déformation, les pigments de poudre conductrice du manchon 20 sont mis en contact et assurent une continuité électrique sur toute la longueur du manchon 20.

Ainsi, avec l'utilisation d'une seule pièce, le manchon souple conducteur 20, selon la présente invention permet de répondre à la double contrainte d'assurer un assemblage à jeu zéro et un contact électrique fiable entre l'interface tactile de commande de l'éclairage, via la surface tactile 7, et la source d'éclairage 14.

Un connecteur mâle 25 permettant de connecter électriquement le dispositif d'éclairage 1 à un faisceau électrique d'alimentation de l'habitacle, non représenté, est formé par des broches de contact 26 qui sont soudées à une extrémité du PCB 12. Le boitier du connecteur 25, entourant les broches de contact 26, vient de matière avec le boitier 2 .

## Revendications

1. Dispositif d'éclairage (1) comportant un boitier (2) logeant au moins une source de lumière (14), ledit boitier (2) comportant une paroi de fond (6) au moins partiellement transparente supportant une interface tactile (7) pour la commande de la source de lumière (14) et laissant passer la lumière générée par la source de lumière (14), et un couvercle (3) fermant le boîtier (2) ; l'ensemble formé par le boîtier (2) et le couvercle (3) étant assemblé sans jeu par des moyens de clippage (4), le boîtier (2) ayant une forme de cuvette (5) dont la paroi de fond (6) supporte l'interface tactile (7) et dont l'ouverture (51) est fermée par une carte de circuit imprimé (12) supportant la source de lumière (14); la source de lumière étant orientée vers la paroi de fond (6);
ledit dispositif d'éclairage étant **caractérisé en ce qu'**il (1) comporte en outre un moyen de liaison mécanique et électrique souple (20) comprimé entre l'interface tactile (7) et la source de lumière (14) permettant à la fois, de commander la source de lumière (14) et de compenser les contraintes exercées par les moyens de clippage (14) ; l'interface tactile comportant une surface conductrice (9) épousant la paroi de fond (6), comportant au moins une partie conductrice (90) s'étendant à partir de la surface conductrice (9) vers la carte de circuit imprimé (12) ; l'extrémité libre de ladite partie conductrice (90) définissant un contact électrique (91) participant à la transmission d'un signal de commande d'éclairage vers la carte de circuit imprimé (12) pour commander l'éclairage de la source de lumière (14).

2. Dispositif d'éclairage (1) selon la revendication précédente, dans lequel le moyen de liaison mécanique et électrique (20) est disposé entre le contact électrique (91) et la carte de circuit imprimé (12).

3. Dispositif d'éclairage (1) selon la revendication précédente dans lequel le moyen de liaison mécanique et électrique (20) est un manchon tubulaire creux, en élastomère, chargé de pigments conducteurs dont la densité est déterminée pour assurer une continuité électrique entre le contact électrique (91) et la carte de circuit imprimé (12).

4. Dispositif d'éclairage selon la revendication précédente dans lequel le couvercle (3) comporte une butée (24) exerçant une force d'appui sur la carte du circuit imprimé (12) ; ladite butée (24) étant centrée sur le manchon tubulaire (20).

5. Dispositif d'éclairage (1) selon l'une quelconque des revendications 1 à 4, dans lequel un dispositif optique (10) est disposé entre la paroi de fond (6) et la carte de circuit imprimé (12) en regard de la source de lumière (14), pour guider la lumière jusqu'à la paroi de fond (6) ; ledit dispositif optique (10) comportant une face d'entrée de lumière en regard de la source de lumière (14) et une face de sortie de lumière en regard de la paroi de fond (6).

6. Dispositif d'éclairage (1) selon la revendication précédente, dans lequel le dispositif optique (10) comporte au moins un pion de centrage (15) coopérant avec la carte de circuit imprimé (12) pour centrer la face d'entrée de lumière du dispositif optique (10) sur la source de lumière (14).

7. Véhicule automobile comportant au moins un dispositif d'éclairage (1) selon l'une des revendications précédentes, disposé à l'intérieur de l'habitacle du véhicule automobile.

8. Véhicule automobile selon la revendication précédente dans lequel le dispositif d'éclairage (1) est une liseuse ou un plafonnier.

## Patentansprüche

1. Beleuchtungsvorrichtung (1) mit einem Gehäuse (2), in dem mindestens eine Lichtquelle (14) untergebracht ist, wobei das Gehäuse (2) eine mindestens teilweise transparente Bodenwand (6) aufweist, die eine taktile Schnittstelle (7) zur Steuerung der Lichtquelle (14) trägt und das von der Lichtquelle (14) erzeugte Licht durchlässt, und mit einem Deckel (3), der das Gehäuse (2) verschließt; wobei die aus dem Gehäuse (2) und dem Deckel (3) gebildete Einheit spielfrei durch Einrastmittel (4) zusammengefügt wird,wobei das Gehäuse (2) die Form einer Schale (5) hat, deren untere Wand (6) die taktile Schnittstelle (7) trägt und deren Öffnung (51) durch eine die Lichtquelle (14) tragende Leiterplatte (12) verschlossen ist;wobei die Lichtquelle zur unteren Wand (6) hin ausgerichtet ist; wobei die Beleuchtungsvorrichtung **dadurch gekennzeichnet ist, dass** sie (1) außerdem ein flexibles mechanisches und elektrisches Verbindungsmittel (20) umfasst, das zwischen der taktilen Schnittstelle (7) und der Lichtquelle (14) zusammengedrückt ist und sowohl die Steuerung der Lichtquelle (14) als auch die Kompensation der von den Abschneidemitteln (14) ausgeübten Spannungen ermöglicht; die Berührungsschnittstelle eine leitende Oberfläche (9) aufweist, die mit der Rückwand (6) übereinstimmt, mit mindestens einem leitenden Abschnitt (90), der sich von der leitenden Oberfläche (9) in Richtung der gedruckten Schaltungsplatte (12) erstreckt; wobei das freie Ende des leitenden Abschnitts (90) einen elektrischen Kontakt (91) definiert, der an der Übertragung eines Beleuchtungssteuersignals an die gedruckte Schaltungsplatte (12) teilnimmt, um die Beleuchtung der Lichtquelle (14) zu steuern.

2. Beleuchtungsvorrichtung (1) nach dem vorhergehenden Anspruch, wobei das mechanische und elektrische Verbindungsmittel (20) zwischen dem elektrischen Kontakt (91) und der Leiterplatte (12) angeordnet ist.

3. Beleuchtungsvorrichtung (1) nach dem vorhergehenden Anspruch, bei der das mechanische und elektrische Verbindungsmittel (20) eine hohle, röhrenförmige Hülse aus Elastomer ist, die mit leitfähigen Pigmenten gefüllt ist, deren Dichte so bestimmt ist, dass die elektrische Kontinuität zwischen dem elektrischen Kontakt (91) und der Leiterplatte (12) gewährleistet ist.

4. Beleuchtungsvorrichtung nach dem vorhergehenden Anspruch, bei der die Abdeckung (3) einen Anschlag (24) aufweist, der eine Auflagekraft auf die Leiterplatte (12) ausübt, wobei der Anschlag (24) auf der rohrförmigen Hülse (20) zentriert ist.

5. Beleuchtungsvorrichtung (1) nach einem der Ansprüche 1 bis 4, wobei eine optische Vorrichtung (10) zwischen der Bodenwand (6) und der der Lichtquelle (14) zugewandten Leiterplatte (12) angeordnet ist, um Licht zur Bodenwand (6) zu leiten, wobei die optische Vorrichtung (10) eine der Lichtquelle (14) zugewandte Lichteingangsfläche und eine der Bodenwand (6) zugewandte Lichtausgangsfläche aufweist.

6. Beleuchtungsvorrichtung (1) nach dem vorhergehenden Anspruch, wobei die optische Vorrichtung (10) mindestens einen Zentrierstift (15) aufweist, der mit der Leiterplatte (12) zusammenwirkt, um die Lichteintrittsfläche der optischen Vorrichtung (10) auf die Lichtquelle (14) zu zentrieren.

7. Kraftfahrzeug mit mindestens einer Beleuchtungseinrichtung (1) nach einem der vorhergehenden Ansprüche, die im Fahrgastraum des Kraftfahrzeugs angeordnet ist.

8. Kraftfahrzeug nach dem vorhergehenden Anspruch, bei dem die Beleuchtungseinrichtung (1) eine Leseleuchte oder eine Deckenleuchte ist.

## Claims

1. Lighting device (1) comprising a housing (2) housing at least one light source (14), said housing (2) comprising an at least partially transparent bottom wall (6) supporting a tactile interface (7) for controlling the light source (14) and allowing the light generated by the light source (14) to pass through, and a cover (3) closing the housing (2); the assembly formed by the case (2) and the cover (3) being assembled without play by clipping means (4),the case (2) having a bowl shape (5) whose bottom wall (6) supports the tactile interface (7) and whose opening (51) is closed by a printed circuit board (12) supporting the light source (14);the light source being oriented towards the bottom wall (6); said lighting device being **characterized in that** it (1) further comprises a flexible mechanical and electrical connection means (20) compressed between the tactile interface (7) and the light source (14) allowing both to control the light source (14) and to compensate for the stresses exerted by the clipping means (14); the touch interface having a conductive surface (9) conforming to the bottom wall (6), including at least one conductive portion (90) extending from the conductive surface (9) toward the printed circuit board (12); the free end of said conductive portion (90) defining an electrical contact (91) participating in the transmission of a light control signal to the printed circuit board (12) to control the illumination of the light source (14).

2. The lighting device (1) according to the preceding claim, wherein the mechanical and electrical connecting means (20) is disposed between the electrical contact (91) and the printed circuit board (12).

3. Lighting device (1) according to the preceding claim in which the mechanical and electrical connection means (20) is a hollow tubular sleeve, made of elastomer, charged with conductive pigments whose density is determined to ensure electrical continuity between the electrical contact (91) and the printed circuit board (12).

4. Lighting device according to the preceding claim in which the cover (3) comprises a stop (24) exerting a bearing force on the printed circuit board (12); said stop (24) being centered on the tubular sleeve (20).

5. The lighting device (1) according to any one of claims 1 to 4, wherein an optical device (10) is arranged between the bottom wall (6) and the printed circuit board (12) facing the light source (14), for guiding light to the bottom wall (6); said optical device (10) comprising a light input face facing the light source (14) and a light output face facing the bottom wall (6).

6. The lighting device (1) according to the preceding claim, wherein the optical device (10) comprises at least one centering pin (15) cooperating with the printed circuit board (12) to center the light input face of the optical device (10) on the light source (14).

7. Motor vehicle comprising at least one lighting device (1) according to one of the preceding claims, arranged inside the passenger compartment of the motor vehicle.

8. Motor vehicle according to the preceding claim in which the lighting device (1) is a reading light or a ceiling light.
